# EUROPEAN PATENT SPECIFICATION

(11) **EP 3 002 569 B1**
(45) Date of publication and mention of the grant of the patent: **07.06.2017**
(21) Application number: 15000255.8
(22) Date of filing: 28.01.2015
(51) Int. Cl.: G01J 5/04, F25B 9/02, G01J 5/06, G05D 23/19, G05D 23/20

(54) **Cooling device**
Kühlvorrichtung
Dispositif de refroidissement

(30) Priority: 18.09.2014 EP 14003245
(43) Date of publication of application: 06.04.2016
(73) Proprietor: Diehl Defence GmbH & Co. KG, 88662 ÜBERLINGEN (DE); Le Tehnika d.o.o., 4000 Kranj (SI)
(72) Inventor: Toporis, Stane, 2000 Maribor (SI); Sarc, Tomaz, 4000 Krani (SI); Rid, Robert, 88677 Markdorf (DE); Megusar, Franc, 4227 Selca (SI)
(74) Representative: Diehl Patentabteilung

(56) References cited:
- EP-A2- 0 699 881
- WO-A1-02/18932
- WO-A2-2012/049673
- GB-A- 1 368 107

## Description

The invention relates to a cooling device for cooling a detector element disposed in the jacket cavity of a Dewar vessel by means of a Joule-Thomson cooler with an expansion nozzle that opens into an expansion chamber, wherein the cooling device comprises a temperature-dependently adjustable control element for influencing the flow through the expansion nozzle.

A cooling device of the above-mentioned type is e.g. known from EP 06 99 881 A2. The control element disclosed therein comprises a choke body acting on the expansion nozzle, which is biased against a heatable shape memory element by means of a restoring spring. The choke body is controllable depending on temperature in the sense of increasing the flow through the expansion nozzle in the event of an increase of the temperature of the detector element. A suitable temperature sensor for detecting the detector temperature is disposed on the detector.

A cooling device of the above-mentioned type is also known from EP 06 99 880 A2. Here the control element provided for influencing the flow through the expansion nozzle comprises a support fed into a bellows. The same can be altered in shape by means of a pressure chamber enveloping the bellows. The detector temperature is also used here as a control input for the temperature regulation. A suitable temperature sensor is disposed on the detector element for this purpose. Further cooling devices are known from WO2012/049673 and GB1368107. Cooling devices of the type described above are used to cool detectors to low temperatures. Detectors, such as e.g. semiconductor detectors, reach their optimal radiation sensitivity only at temperatures far below room temperature. Therefore suitable cooling is necessary.

In the case of a cooling device of the above-mentioned type, the detector element is disposed in a jacket cavity of a Dewar vessel. An inlet window is disposed in the outer casing on the detector-side end of the Dewar vessel, wherein the window passes the radiation to be detected by the detector element. For example, the inlet window is made of a material that is transmissive for infrared (IR) radiation if the detector element is an IR detector.

On the rear of the detector element a Joule-Thomson cooler is disposed in the interior of the Dewar vessel. A pressurized gas or general coolant that is fed in is expanded at the expansion nozzle and as a result cools according to its Joule-Thomson thermal coefficients into a region close to its boiling temperature. For example, argon, nitrogen or air, whose boiling temperatures lie below 100 K, can be used as pressurized gases.

Semiconductor detectors and especially IR detectors have to be operated at very low temperatures. In particular, this applies to so-called MCT detectors, which can be made from an alloy of mercury, cadmium and tellurium. Furthermore, during the recording period very high temperature stability is advantageous.

Disadvantageously, the cooling devices of the prior art exhibit a relatively large time constant for the control loop. The temperature sensor is disposed on the detector element in the jacket cavity of the Dewar vessel. Accordingly, the achievable temperature stability is limited. On the other hand, actively regulated cooling devices can to date only be operated at temperatures of approx. 5°K above the boiling temperature of the pressurized gas being used and thus in the gas phase. The control temperature is limited by the boiling temperature. A change of cooling power directly causes a change of temperature.

The object of the invention is to improve a cooling device of the above-mentioned type with regard to temperature stability and the achievable low temperature.

This object is achieved by a cooling device according claim 1. A detector element disposed in the jacket cavity of a Dewar vessel is cooled by means of a Joule-Thomson cooler with an expansion nozzle that opens into an expansion chamber, wherein the same comprises a temperature dependently adjustable final control element for influencing the flow through the expansion nozzle, in that a first temperature sensor is disposed in the expansion chamber and a second temperature sensor is disposed within the Dewar vessel outside of the expansion chamber, and that
a control device is provided that is configured for recording a temperature gradient from the sensor values of the first temperature sensor and of the second temperature sensor and for adjustment of the final control element depending on the recorded temperature gradient.

The invention is based on the consideration that the Joule-Thomson cooler is operated with a liquid phase in the expansion chamber in order to make use of the inherent temperature stability as a result of the boiling temperature of the pressurized gas. Improved temperature stability of the cooling device is achieved because of that. Regulatable and/or controllable operation of the Joule-Thomson cooler with a liquid phase in the expansion chamber is possible by recording a temperature gradient between the expansion chamber and a quasi-stable temperature level outside the expansion chamber. For this purpose a first temperature sensor is disposed in the expansion chamber and a second temperature sensor is disposed outside the expansion chamber in the Dewar vessel. A quasi-stable temperature gradient is formed along the Dewar vessel between the low temperature at the detector end and room temperature at the other end. A quasi-stable temperature level is recorded within said gradient by means of the second temperature sensor. The term "quasi-stable" means in this connection that the time constant of the temperature profile is negligibly small in comparison with time constants of the control path.

The recorded temperature gradient is a measure of the degree of wetting of the first temperature sensor that is disposed in the expansion chamber. The degree of wetting of the first temperature sensor is in turn a measure of the mixing ratio of liquefied pressurized gas and gaseous pressurized gas in the expansion chamber. The flow conditions in the expansion chamber are turbulent, so that good mixing of the gas phase and the liquid phase results and good use of the temperature sensor is ensured.

The temperature information or the information about the recorded temperature gradient and thus about the state of cooling of the cooling device can be used in a control loop in order to keep the mixture ratio of the gas phase and the liquid phase in the expansion chamber within a defined range. The time constant of said regulation is reduced compared to a regulation of the prior art, according to which the detector temperature is used as a control input. The recorded temperature gradient responds directly to a change of the mixing ratio of the gas phase and the liquid phase in the expansion chamber.

The invention enables the cooling device or the Joule-Thomson cooler to operate at the boiling temperature of the pressurized gas being used. At the same time high temperature stability is achieved with the principle described because the inherent temperature stabilization owing to the boiling temperature is exploited. The cooling temperature is basically only dependent on the counterpressure in the gas outlet and hence on the variation of the gas throughput. In the case of a suitable configuration of the gas outlet or the counterflow heat exchanger that is usually used here, changes in pressure are negligible.

The second temperature sensor is preferably disposed separately from the expansion chamber in an inner rear chamber of the Dewar vessel. A quasi-stable temperature level is ensured in the interior of the Dewar vessel.

In an advantageous embodiment of the cooling device, a hollow tube that is enveloped by a counterflow heat exchanger is disposed within the Dewar vessel, wherein the rear chamber, in which the second temperature sensor is disposed, is disposed within the hollow tube. A pressurized gas line is provided between the hollow tube and the inner wall of the Dewar vessel in a normal implementation, the line running helically around the hollow tube and opening in the expansion nozzle. The expanded pressurized gas flows around the pressurized gas line in the counterflow direction and exits the cooling device at its end remote from the detector element. In the Dewar vessel during operation, between the end of the detector and the end remote from the detector element there is a stable temperature drop between the low temperature in the expansion chamber and room temperature at the gas outlet.

The final control element can be of any design in principle. In a preferred embodiment version, the final control element comprises a choke body and a shape memory element connected to the choke body. A shape memory element has in particular a temperature-dependent change in shape or change in length, which is significantly increased compared to the material-specific temperature response. Said change in shape or change in length of a shape memory element is used for regulation and/or control of the flow through the expansion nozzle. The shape memory element is e.g. made of a metal alloy, which has a transition between a martensitic phase and an austenitic phase in the temperature range in which it is used. NiTi, CuZnAl or CuAlNi can be used as a suitable metal alloy. The choke body joined to the shape memory element affects the expansion nozzle to influence the flow accordingly. The shape memory element is especially heatable for temperature-dependent regulation of the flow at the expansion nozzle.

In another useful embodiment, a third temperature sensor is disposed on the detector element, wherein the control device is additionally configured for detecting a detector temperature using the sensor value of the third temperature sensor and for adjusting the final control element depending on the detected detector temperature.

Advantageously, the control device is configured such that the detector temperature is used as a control input in an outer control loop for the control element and the temperature gradient is used as a control input in an inner control loop for the control element. The regulator thus consists of an inner control loop and an outer control loop. As a result the achievable temperature stability of the cooling device is further improved.

In another advantageous version the first temperature sensor and the second temperature sensor are disposed at the ends of a temperature probe, which protrudes with its first end into the expansion chamber and extends within the Dewar vessel to outside the expansion chamber with its second end. The temperature gradient is thus directly detected by means of the temperature probe. The temperature gradient and thus the regulation sensitivity becomes greater as the thermal conductivity of the material used for the temperature probe becomes poorer. For example, stainless steel is preferably used as the material for the temperature probe.

An exemplary embodiment of the invention is explained in detail using a figure. The single figure shows in a cross-section a cooling device for cooling a detector element disposed in the jacket cavity of a Dewar vessel by means of a Joule-Thomson cooler.

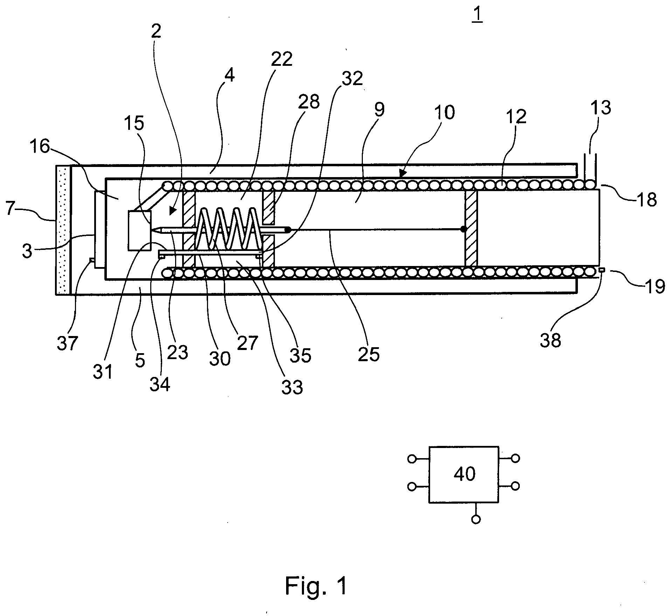

The cooling device 1 illustrated in Fig. 1 comprises a Joule-Thomson cooler 2 for cooling a detector element 3 in a Dewar vessel 4. The detector element 3 of the cooling device 1 is disposed in the jacket cavity 5 of the Dewar vessel 4. On the detector side of the Dewar vessel 4 an inlet window 7 is inserted into its outer casing. The inlet window 7 is transmissive for radiation that is to be detected by the detector element 3. In particular, the inlet window 7 is transmissive for IR radiation if the detector element 3 is an IR detector.

A hollow tube 9 is disposed in the interior of the Dewar vessel 4. A counterflow heat exchanger 10 is formed between the hollow tube 9 and an inner wall of the Dewar vessel 4. A pressurized gas line 12 runs helically around the hollow tube 9. The pressurized gas line 12 is supplied from a gas connector 13. On the detector side the pressurized gas line 12 opens in an expansion nozzle 15. The pressurized gas delivered via the pressurized gas line 12 expands there in an expansion chamber 16. Expanded pressurized gas flows from the expansion chamber 16 in the counterflow direction over the outside of the pressurized gas line 12 to the end of the cooling device 1 facing away from the detector element 3 and exits the cooling device via the gas outlet 18, 19.

At the expansion nozzle 15 the pressurized gas is expanded and as a result cools according to its Joule-Thomson thermal coefficient. The expansion chamber 16 and thus the detector element 3 is thereby cooled by thermal conduction at its rear. The illustrated cooling device 1 is hereby operated such that there is a mixture of the gas phase and the liquid phase of the pressurized gas in the expansion chamber 16. In other words, the cooling device 1 is operated in the region of the boiling temperature of the pressurized gas, whereby temperature stabilization is inherently set up.

For the control and/or regulation of the flow through the expansion nozzle 15, a final control element 22 is disposed in the hollow tube 9. The final control element 22 comprises a choke body 23 acting on the expansion nozzle 15, which is connected to a shape memory element 25. The choke body 23 is thereby biased against a thrust bearing element 28 by a restoring spring 27. The temperature-dependent influencing of the flow in the expansion nozzle 15 takes place by means of a change of length of the shape memory element 25. The shape memory element 25 is especially heatable for regulation.

In the interior of the Dewar vessel 4 a temperature probe 30 is also disposed, whose first end 31 protrudes into the expansion chamber 16. The temperature probe 30 is mounted on the thrust bearing element 28 with its second end 32. A rear chamber 33 is formed within the hollow tube 9 in the region of the final control element 22, being separated from the expansion chamber 16.

A first temperature sensor 31 is disposed at the first end 31 of the temperature probe 30. A second temperature sensor 35 is disposed at the second end 32 of the temperature probe 30 in the rear chamber 33. Whereas the first temperature sensor 34 measures the temperature in the expansion chamber or its degree of wetting with liquefied pressurized gas, the second temperature sensor 35 detects a quasi-stable temperature level on the thrust bearing element 28. In the Dewar vessel 4 or in the hollow tube 9 a quasi-stable temperature drop is formed along the cooling device 1 between the low temperature on the detector side and room temperature on the side remote from the detector element 3.

The temperature gradient along the temperature probe 30 is a measure of the degree of wetting. The degree of wetting in turn is a measure of the mixing ratio of the liquid phase and the gas phase of the pressurized gas in the expansion chamber 16. The temperature gradient is particularly sensitive to a change of the mixing ratio and can thus be used with relatively small time constants as a control input for the regulation of the flow through the expansion nozzle 15 by means of the final control element 22. Said regulation enables the operation of the cooling device 1 at the boiling temperature of the pressurized gas. The mixing ratio of the liquid phase and the gas phase can be adjusted in the expansion chamber 16. High temperature stabilization is achieved.

Furthermore, a third temperature sensor 37, by means of which the detector temperature is detected, is disposed on the detector element 3. The detector temperature can also be used for regulation of the flow through the expansion nozzle 15. Additionally, a fourth temperature sensor 38 is disposed on the end of the cooling device 4 facing away from the detector element 3.

A control device 40 is provided for the control and/or regulation of the cooling device 1. The control device 40 is especially configured to use the temperature gradient along the temperature probe 30 as a control input for the control element 22 in an inner control loop and to use the detector temperature as a control input for the control element 22 in an outer control loop.

The invention enables improved temperature stability in comparison to the prior art. The cooling device can be operated closer to the boiling temperature or at the boiling temperature itself because of the reduced time constants in the control loop compared to the prior art.

### Reference character list

- 1: cooling device
- 2: Joule-Thomson cooler
- 3: detector element
- 4: Dewar vessel
- 5: jacket cavity
- 7: inlet window
- 9: hollow tube
- 10: counterflow heat exchanger
- 12: pressurized gas line
- 13: gas connection
- 15: expansion nozzle
- 16: expansion chamber
- 18: gas outlet
- 19: gas outlet
- 22: final control element
- 23: choke body
- 25: shape memory element
- 27: restoring spring
- 28: thrust bearing element
- 30: temperature probe
- 31: first end
- 32: second end
- 33: rear chamber
- 34: first temperature sensor
- 35: second temperature sensor
- 37: third temperature sensor
- 38: fourth temperature sensor
- 40: control device

## Claims

1. Cooling device (1) for cooling a detector element (3) comprising a Dewar vessel (4) with a jacket cavity (5) and a Joule-Thomson cooler (2) with an expansion noozle (15) which opens into an expansion chamber (16), wherein the detector element (3) is disposed in the jacket cavity (5) next to the expansion chamber (16), wherein the cooling device (1) further comprises a final control element (22) that is adjustable depending on the temperature for regulating the flow through the expansion nozzle (15) and a control device (40) for the control and/or regulation of the cooling device (1), **characterized in that** the cooling device (1) further comprises a first temperature sensor (34) and a second temperature sensor (35), wherein said first temperature sensor (34) is disposed in the expansion chamber (16) and said second temperature sensor (35) is disposed within the Dewar vessel (4) outside the expansion chamber (16) and that the control device (40) is configured for detecting a temperature gradient from the sensor values of the first temperature sensor (34) and of the second temperature sensor (35) and for adjusting the final control element (22) depending on the detected temperature gradient to regulate the flow through the expansion nozzle (15).

2. Cooling device (1) according to Claim 1,
**characterized in that** the cooling device (1) further comprises a hollow tube (9) disposed within the Dewar vessel (4), the hollow tube (9) being enveloped by a counterflow heat exchanger (10), and that an inner rear chamber (33), in which the second temperature sensor (35) is disposed, is disposed within the hollow tube (9).

3. Cooling device (1) according to any one of the preceding claims,
**characterized in that** the cooling device (1) further comprises a temperature probe (30), wherein the first temperature sensor (34) and the second temperature sensor (35) are disposed at the ends (31, 32) of said temperature probe (30), which protrudes into the expansion chamber (16) with its first end (31) and extends within the Dewar vessel (4) to outside the expansion chamber (16) with its second end (32).

4. Cooling device (1) according to any one of the preceding claims,
**characterized in that** the final control element (22) comprises a choke body (23) and a shape memory element (25) connected to the choke body (23).

5. Cooling device (1) according to any one of the preceding claims,
**characterized in that** the cooling device (1) further comprises a third temperature sensor (37) disposed on the detector element (3) and that the control device (40) is additionally configured for detecting a detector temperature using the sensor value of the third temperature sensor (37) and for adjusting the final control element (22) depending on the detected detector temperature.

6. Cooling device (1) according to Claim 5,
**characterized in that** the control device (40) is configured to use the detector temperature as a control input in an outer control loop for the control element (22) and to use the temperature gradient as a control input in an inner control loop for the control element (22).

## Patentansprüche

1. Kühlvorrichtung (1) zur Kühlung eines Detektorelements (3), das ein Dewar-Gefäß (4) mit einem Mantelhohlraum (5) und einen Joule-Thomson-Kühler (2) mit einer Expansionsdüse (15), die in einen Entspannungsraum (16) mündet, umfasst, wobei das Detektorelement (3) in dem Mantelhohlraum (5) neben dem Entspannungsraum (16) angeordnet ist, wobei die Kühlvorrichtung (1) ferner ein temperaturabhängig verstellbares Stellglied (22) zum Regeln des Durchflusses durch die Expansionsdüse (15) und eine Kontrolleinrichtung (40) zur Steuerung und/oder Regelung der Kühlvorrichtung (1) umfasst,
**dadurch gekennzeichnet, dass** die Kühlvorrichtung (1) ferner einen ersten Temperatursensor (34) und einen zweiten Temperatursensor (35) umfasst, wobei der erste Temperatursensor (34) im Entspannungsraum (16) und der zweite Temperatursensor (35) innerhalb des Dewar-Gefäßes (4) außerhalb des Entspannungsraums (16) angeordnet ist, und dass die Kontrolleinrichtung (40) zur Erfassung eines Temperaturgradienten aus den Sensorwerten des ersten Temperatursensors (34) und des zweiten Temperatursensors (35) und zu einer Verstellung des Stellglieds (22) abhängig vom erfassten Temperaturgradienten zum Regeln des Durchflusses durch die Expansionsdüse (15) eingerichtet ist.

2. Kühlvorrichtung (1) nach Anspruch 1,
**dadurch gekennzeichnet, dass** die Kühlvorrichtung (1) ferner ein innerhalb des Dewar-Gefäßes (4) angeordnetes Hohlrohr (9) umfasst, wobei das Hohlrohr (9) von einem Gegenstromwärmetauscher (10) umgeben ist, und dass der Rückraum (33), in dem der zweite Temperatursensor (35) angeordnet ist, innerhalb des Hohlrohrs (9) angeordnet ist.

3. Kühlvorrichtung (1) nach einem der vorhergehenden Ansprüche,
**dadurch gekennzeichnet, dass** die Kühlvorrichtung (1) ferner einen Temperaturfühler (30) umfasst, wobei der erste Temperatursensor (34) und der zweite Temperatursensor (35) an den Enden (31, 32) des Temperaturfühlers (30) angeordnet sind, der mit seinem ersten Ende (31) in den Entspannungsraum (16) ragt und sich mit seinem zweiten Ende (32) im Dewar-Gefäß (4) bis außerhalb des Entspannungsraums (16) erstreckt.

4. Kühlvorrichtung (1) nach einem der vorhergehenden Ansprüche,
**dadurch gekennzeichnet, dass** das Stellglied (22) einen Drosselkörper (23) und ein mit dem Drosselkörper (23) verbundenes Formgedächtniselement (25) umfasst.

5. Kühlvorrichtung (1) nach einem der vorhergehenden Ansprüche,
**dadurch gekennzeichnet, dass** die Kühlvorrichtung (1) ferner einen dritten Temperatursensor (37), der am Detektorelement (3) angeordnet ist, umfasst und dass die Kontrolleinrichtung (40) zusätzlich zur Erfassung einer Detektortemperatur anhand des Sensorwerts des dritten Temperatursensors (37) und zu einer Verstellung des Stellglieds (22) abhängig von der erfassten Detektortemperatur eingerichtet ist.

6. Kühlvorrichtung (1) nach Anspruch 5,
**dadurch gekennzeichnet, dass** die Kontrolleinrichtung (40) eingerichtet ist, in einem äußeren Regelkreis für das Stellglied (22) die Detektortemperatur als Führungsgröße und in einem inneren Regelkreis für das Stellglied (22) den Temperaturgradienten als Führungsgröße zu verwenden.

## Revendications

1. Dispositif de refroidissement (1) servant à refroidir un élément détecteur (3), comprenant un vase de Dewar (4) comportant une cavité d'enveloppe (5) et un système de refroidissement de type Joule-Thomson (2) comportant une buse d'expansion (15) qui débouche dans une chambre d'expansion (16), l'élément détecteur (3) étant disposé dans la cavité d'enveloppe (5), en position adjacente à la chambre d'expansion (16), le dispositif de refroidissement (1) comprenant en outre un élément de commande final (22) qui peut être réglé en fonction de la température afin de réguler l'écoulement à travers la buse d'expansion (15) et un dispositif de commande (40) servant à la commande et/ou la régulation du dispositif de refroidissement (1),
**caractérisé en ce que** le dispositif de refroidissement (1) comprend en outre un premier capteur de température (34) et un deuxième capteur de température (35), ledit premier capteur de température (34) étant disposé dans la chambre d'expansion (16) et ledit deuxième capteur de température (35) étant disposé dans le vase de Dewar (4) à l'extérieur de la chambre d'expansion (16) et **en ce que** le dispositif de commande (40) est configuré pour détecter un gradient de température à partir des valeurs de capteur du premier capteur de température (34) et du deuxième capteur de température (35) et pour régler l'élément de commande final (22) en fonction du gradient de température détecté afin de réguler l'écoulement à travers la buse d'expansion (15).

2. Dispositif de refroidissement (1) selon la revendication 1, **caractérisé en ce que** le dispositif de refroidissement (1) comprend en outre un tube creux (9) disposé à l'intérieur du vase de Dewar (4), le tube creux (9) étant enveloppé par un échangeur thermique à contre-courant (10), et **en ce qu'**une chambre arrière intérieure (33), dans laquelle est disposé le deuxième capteur de température (35), est disposée à l'intérieur du tube creux (9).

3. Dispositif de refroidissement (1) selon l'une quelconque des revendications précédentes, **caractérisé en ce que** le dispositif de refroidissement (1) comprend en outre une sonde thermométrique (30), le premier capteur de température (34) et le deuxième capteur de température (35) étant disposés au niveau des extrémités (31, 32) de ladite sonde thermométrique (30), qui fait saillie dans la chambre d'expansion (16) avec sa première extrémité (31) et s'étend à l'intérieur du vase de Dewar (4) jusqu'à l'extérieur de la chambre d'expansion (16) avec sa seconde extrémité (32).

4. Dispositif de refroidissement (1) selon l'une quelconque des revendications précédentes, **caractérisé en ce que** l'élément de commande final (22) comprend un corps d'obstruction (23) et un élément à mémoire de forme (25) raccordé au corps d'obstruction (23).

5. Dispositif de refroidissement (1) selon l'une quelconque des revendications précédentes, **caractérisé en ce que** le dispositif de refroidissement (1) comprend en outre un troisième capteur de température (37) disposé sur l'élément détecteur (3) et **en ce que** le dispositif de commande (40) est en outre configuré pour détecter une température de détecteur au moyen de la valeur de capteur du troisième capteur de température (37) et pour régler l'élément de commande final (22) en fonction de la température de détecteur détectée.

6. Dispositif de refroidissement (1) selon la revendication 5, **caractérisé en ce que** le dispositif de commande (40) est configuré pour utiliser la température de détecteur en tant que donnée de commande en entrée dans une boucle de régulation extérieure pour l'élément de commande (22) et pour utiliser le gradient de température en tant que donnée de commande en entrée dans une boucle de régulation intérieure pour l'élément de commande (22).
